# EUROPÄISCHE PATENTSCHRIFT

(11) **EP 3 554 929 B1**
(45) Veröffentlichungstag und Bekanntmachung des Hinweises auf die Patenterteilung: **22.05.2024**
(21) Anmeldenummer: 17786907.0
(22) Anmeldetag: 19.10.2017
(51) Int. Cl.: B62D 55/24, B62D 55/26

(54) **RAUPENKETTE, INSBESONDERE GUMMIRAUPENKETTE**
CRAWLER TRACK, IN PARTICULAR RUBBER CRAWLER TRACK
CHENILLE, EN PARTICULIER CHENILLE EN CAOUTCHOUC

(30) Priorität: 19.12.2016 DE 102016225423
(43) Veröffentlichungstag der Anmeldung: 23.10.2019
(73) Patentinhaber: Loc Performance Products, LLC, Plymouth, MI 48170 (US)
(72) Erfinder: HÜLS, Achim, 30890 Barsinghausen (DE); BEHRENS, Carsten, 37434 Bilshausen (DE)
(74) Vertreter: Grünecker Patent- und Rechtsanwälte PartG mbB
(86) Internationale Anmeldenummer: PCT/EP2017/076654
(87) Internationale Veröffentlichungsnummer: WO 2018/114085

(56) Entgegenhaltungen:
- EP-A1- 2 327 611
- EP-A2- 2 502 807
- CA-C- 2 182 845
- JP-A- H11 301 535
- KR-B1- 101 670 680
- US-A1- 2004 026 995
- US-A1- 2006 238 027
- US-A1- 2015 042 152

## Beschreibung

Die vorliegende Erfindung betrifft eine Raupenkette, insbesondere eine Gummiraupenkette, gemäß dem Oberbegriff des Patentanspruchs 1, eine Raupenkette, insbesondere eine Gummiraupenkette, gemäß dem Oberbegriff des Patentanspruchs 2, eine Raupenkette, insbesondere eine Gummiraupenkette, gemäß dem Oberbegriff des Patentanspruchs 3.

Als Antriebsmechanismen für Landfahrzeuge sind u.a. Raupenketten bekannt. Diese können nicht nur im militärischen Bereich sondern auch bei landwirtschaftlichen Fahrzeugen sowie bei anderen Fahrzeugen für die Fortbewegung in unwegsamem Gelände genutzt werden. Raupenketten weisen üblicherweise an ihrer Innenseite, vorzugsweise mittig, nach innenragende Zahnelemente auf, mittels derer die Raupenkette von einem Antriebsrad oder dergleichen des Fahrzeugs erfasst und fortbewegt werden kann. An ihrer Außenseite weisen Raupenketten üblicherweise eine Profilierung auf, um auf dem Untergrund besser Halt finden zu können. Diese Profilierung kann ähnlich wie bei z.B. einem Traktorreifen beschaffen sein, d.h. die Profilierung kann z.B. balkenförmige radiale Erhebungen aufweisen, die schräg zur Laufrichtung der Raupenkette auf dieser angeordnet sind. Die innenliegenden Zahnelemente und die außenliegenden Profilierungselemente sind üblicherweise durch einen Raupenkettenkörper verbunden, der endlos geschlossen ist. Raupenketten können aus Gummi hergestellt sein und dann als Gummiraupenketten bezeichnet werden. Raupenketten können endlos geschlossen oder auch offen hergestellt werden. Sie können einen Zugträger zur Übertragung von Zugkräften z.B. in Form von Stahlseilen aufweisen, der in Laufrichtung mehrfach umlaufend angeordnet sein kann. Es können Querarmierungen vorhanden sein, die die Kräfte in der Breite der Raupenkette übertragen helfen können. Die Zugträger und bzw. oder Querarmierungen sind üblicherweise im Raupenkettenkörper eingeschlossen, z.B. einvulkanisiert.

Zur Herstellung von Gummiraupenketten ist es z.B. aus der EP 1 075 385 B1 bekannt, in entsprechende Aussparungen einer zylindrischen Innenform unvulkanisierte Gummielemente einzulegen, die später die Innenzähne der Gummiraupenkette bilden sollen. Über die unvulkanisierten Innenzähne bzw. die Außenfläche der Innenform wird dann der Raupenkettenkörper aus dem gleichen unvulkanisierten Gummi mit dort eingebetteten Zugträgern aufgebracht, z.B. durch Wickeln. Dabei wird der Raupenkettenkörper radial nach außen so dick aufgebaut, dass aus dem radial äußeren unvulkanisierten Material die außenseitige Profilierung geformt werden kann. Dies geschieht dadurch, dass eine zylindrische Außenform, welche an ihrer Innenseite die Außenkontur der Profilierung aufweist, und die unvulkanisierte Gummiraupenkette aneinander gepresst werden, so dass sich das außenliegende unvulkanisierte Material zur Profilierung verformt. Dann erfolgt die Vulkanisation innerhalb der Presse.

Bei der Herstellung einer Gummiraupenkette gemäß der EP 1 135 248 B1 werden die Innenzähne als unvulkanisierte Gummielemente ausgebildet und in die entsprechenden Aussparungen einer zylindrischen Innenform eingelegt. Der übrige Körper der Gummiraupenkette wird separat aus dem gleichen Gummi unvulkanisiert aufgebaut und dann auf die Innenform aufgelegt. Durch Zusammenpressen der Innenform und Außenform werden die Innenzähne von Innen an den Körper der Gummiraupenkette gepresst und auf der Außenseite der Gummiraupenkette die äußeren Formsegmente durch Druck ausgebildet. Dann erfolgt die Vulkanisation innerhalb der Presse. Die Innenform und die Außenform ist dabei segmentiert aufgebaut, wobei die Segmente anfänglich in Umfangsrichtung zueinander beabstandet angeordnet sind und im Rahmen der Vulkanisation zusammengedrückt werden, so dass sie eine zylindrische geschlossene Form ergeben.

Aus der DE 10 2015 205 071 A1 ist ein Herstellungsverfahren für Gummiraupenketten bekannt, bei dem zuerst unvulkanisierte Formelemente, welche die Innenzähne der Gummiraupenkette bilden sollen, in die entsprechenden Aussparungen eines Dorns einer Innenform eingebracht werden. Danach wird ein unvulkanisierter Körper der Gummiraupenkette mit Zugträgern auf die Formelemente für Innenzähne und die radiale Außenseite des Dorns aufgebracht. Ferner werden unvulkanisierte Formelementen des gleichen Gummimaterials, welche die Außenzähne der Gummiraupenkette bilden sollen, die in entsprechenden Aussparungen der Außenform eingebracht. Anschließend werden die Innenform und die Außenform zusammengefügt und der Körper der Gummiraupenkette mit den Formelementen für Innenzähne und mit den Formelementen für Außenzähne vulkanisiert. Auf diese Weise können Gummiraupenketten mit Zugträgern einfach und kostengünstig hergestellt werden, ohne dass sich bei der Herstellung eine Verlagerung der Zugträger ergeben kann. Wenigstens kann die Verlagerung der Zugträger reduziert werden.

Nachteilig bei allen bekannten Gummiraupenketten kann es sein, dass die nach außen zeigende Profilierung bzw. die Außenzähne, welche auch als Stollen bezeichnet werden kann, im Laufe der Benutzung z.B. durch Abtrieb abgenutzt werden können. Hierdurch können sich die Eigenschaften der nach außen zeigenden Profilierung ändern. Insbesondere kann z.B. die Wirkung verloren gehen, auf dem Untergrund einen besseren Griff als die übrigen Bereiche der Gummiraupenkette zu erreichen. Dies kann insbesondere dann eintreten, wenn der Bereich des nach außen zeigenden Stollenkörpers z.B. durch Abrieb abgetragen wurde und nun der darunter liegende Stollenfuß nach außen zeigt.

Daher ist es wünschenswert, eine derartige Abnutzung der nach außen zeigenden Profilierung rechtzeitig erkennen zu können, um die Gummiraupenkette dann auszutauschen und bzw. oder die Benutzung des entsprechenden Fahrzeugs zu unterbrechen bzw. zu beenden.

Nachteilig ist hierbei bisher, dass die Einschätzung der Abnutzung der nach außen zeigenden Profilierung einer Gummiraupenkette dem optischen Eindruck eines Benutzers überlassen bleibt. Hierdurch kann die Entscheidung zum z.B. Austausch einer Gummiraupenkette sowohl zu früh als auch zu spät getroffen werden.

Die KR 101 670 680 B1 bezieht sich auf eine Raupe, die einen Abnutzungsbegrenzungszeitpunkt anzeigt. Hierzu ermöglicht die Raupe, die den Abnutzungsbegrenzungszeitpunkt anzeigt, dem Arbeiter, den Raupenwechselzeitpunkt zu bemerken, wenn Abnutzungsbegrenzungsanzeigeeinheiten, die von den vorderen und hinteren Oberflächen der Stollen hervorstehen, auf einer identischen Oberfläche mit der abgenutzten Oberfläche der Stollen positioniert sind, das Eindringen von Fremdmaterialien in die Kettenradbohrung verhindert wird, wobei das Eindringen von Fremdmaterialien durch Vorsprünge verhindert wird, die von den inneren Oberflächen der Laschen vorstehen, und die Spannung, die durch eine äußere Kraft verursacht wird, die erzeugt wird, wenn das Kettenrad verriegelt und betrieben wird, unter Verwendung einer spannungsverteilenden, nach außen gekrümmten Oberfläche und einer spannungsverteilenden, nach innen gekrümmten Oberfläche verteilt wird, die in den Eckteilen der Kettenradbohrung ausgebildet sind.

Eine Aufgabe der vorliegenden Erfindung ist es, eine Raupenkette, insbesondere eine Gummiraupenkette, der eingangs beschriebenen Art bereit zu stellen, so dass das Maß der Abnutzung der nach außen zeigenden Profilierung durch einen Benutzer genauer eingeschätzt werden kann als bisher bekannt. Zumindest soll eine Alternative zu bekannten Raupenketten und insbesondere zu bekannten Gummiraupenketten mit nach außen zeigender Profilierung geschaffen werden.

Die Aufgabe wird erfindungsgemäß durch eine Raupenkette und insbesondere durch eine Gummiraupenkette mit den Merkmalen gemäß Patentanspruch 1, mit den Merkmalen gemäß Patentanspruch 2, mit den Merkmalen gemäß Patentanspruch 3 gelöst. Vorteilhafte Weiterbildungen sind in den Unteransprüchen beschrieben.

Somit betrifft die vorliegende Erfindung eine Raupenkette, insbesondere eine Gummiraupenkette, mit einem Kettenkörper und mit wenigstens einem äußeren Profilierungselement, vorzugsweise mit einer Mehrzahl von äußeren Profilierungselementen, welches von dem Kettenkörper weg nach außen gerichtet ist.

Das äußere Profilierungselement weist einen nach außen gerichteten Stollenkörper und einen Stollenfuß auf, welcher den Stollenkörper mit dem Kettenkörper verbindet, wobei das äußere Profilierungselement zumindest abschnittsweise eine Markierung aufweist, welche die Grenze zwischen dem Stollenkörper und dem Stellenfuß optisch und bzw. oder haptisch erkennbar machen kann. Verschiedene bevorzugte Möglichkeiten einer Umsetzung einer derartigen Markierung werden im Folgenden näher erläutert.

Dabei liegt der vorliegenden Erfindung die Erkenntnis zugrunde, dass derartige äußere Profilierungselemente bisher ein nach außen einheitliches Erscheinungsbild aufweisen. Hierdurch kann das Erreichen eines unzulässig hohen Abtrags des äußeren Profilierungselements z.B. durch Abrieb auf einem Untergrund, d.h. das Erreichen einer Verschleißgrenze, nur unzureichend genau erkannt werden.

Unter einer Verschleißgrenze wird dabei eine Zone, eine Fläche oder dergleichen verstanden, welche zumindest im Wesentlichen senkrecht zu der Richtung angeordnet ist, in der das äußere Profilierungselement von dem Kettenkörper nach außen weg zeigt. Wird dabei das äußere Profilierungselement in einen nach außen zeigenden Bereich in Form eines Stollenkörpers, dessen Abtrag als unkritisch angesehen werden kann, und einen darunterliegenden Bereich in Form eines Stollenfußes, dessen Abtrag als kritisch angesehen werden kann, unterteilt, kann die Verschleißgrenze zwischen dem Stollenkörper und dem Stollenfuß liegen.

Bisher ist es bekannt, dass das äußere Profilierungselement einheitlich aus demselben Material besteht und die Unterteilung in Stollenkörper und Stollenfuß eine rein funktionale Betrachtungsweise ist, die sich nicht in unterschiedlichen Materialien wiederspiegelt. Somit weist das äußere Profilierungselement bisher auch eine einheitliche Farbe, welche üblicherweise schwarz ist, sowie eine einheitliche Oberflächenstruktur auf. Falls Strukturierungen der Oberfläche von äußeren Profilierungselementen bekannt sind, weisen diese zumindest bisher keinen Hinweis auf die Verschleißgrenze auf.

Vor diesem Hintergrund wird nun erfindungsgemäß die Verschleißgrenze zumindest abschnittsweise durch eine optisch und bzw. oder haptisch durch den Benutzer erfassbare Markierung gekennzeichnet, so dass das Erreichen eines unzulässigen Abtrags des Stollenkörpers durch den Benutzer einfacher als bisher bekannt erkannt werden kann.

Auf diese Weise kann die Entscheidung über einen z.B. Austausch einer Raupenkette besser als bisher bekannt getroffen werden. Zum einen kann dies einen zu frühen Austausch einer noch nutzbaren Raupenkette vermeiden, so dass Kosten hinsichtlich Material und Zeitaufwand gespart werden können. Zum anderen kann ein zu später Austausch einer längst unzulässig abgenutzten bzw. beschädigten Raupenkette vermieden werden, was die Sicherheit der Nutzung erhöhen kann.

Vorzugsweise wird die optische und bzw. oder haptische Markierung wenigstens oder sogar ausschließlich auf wenigstens einer Seite, vorzugsweise beiden Seiten, des äußeren Profilierungselements in Querrichtung angeordnet, da dieser Bereich bei der Benutzung üblicherweise gar keinen oder zumindest einen deutlich geringen Kontakt um Untergrund hat als die Flanken des äußeren Profilierungselements in der Höhe und in der Längsrichtung der Raupenkette. Auf diese Weise kann die optische und bzw. oder haptische Markierung davor geschützt werden, beschädigt oder abgerieben zu werden, bevor die Verschleißgrenze des Stollenkörpers tatsächlich erreicht wurde.

Erfindungsgemäß weist der Stollenkörper ein Material einer ersten Farbe und der Stollenfuß ein Material einer zweiten Farbe auf, wobei sich die beiden Farben voneinander unterscheiden. Auf diese Weise kann optisch einfach erkannt werden, dass in dem Maße, in dem das Material der ersten Farbe z.B. durch Abrieb abgetragen wurde, auch der Stollenkörper nicht mehr vorhanden ist. Ist somit das Material der ersten Farbe weitestgehend bis vollständig abgetragen, so ist auch der Stollenkörper entsprechend stark abgetragen und die Verschleißgrenze kann als erreicht angesehen werden.

Erfindungsgemäss ist zumindest abschnittsweise zwischen dem Stollenkörper und dem Stollenfuß ein farbiges Material als Markierung angeordnet, welches sich farblich von dem Material des Stollenkörpers und von dem Material des Stollenfußes unterscheidet. Auf diese Weise kann die Verschleißgrenze als Bereich bzw. Schicht markiert werden. Ist die farbige Markierung von oben sichtbar, so muss hierfür der Stollenkörper entsprechend abgetragen worden sein, so dass dies als Anzeichen des Erreichens der Verschleißgrenze angesehen werden kann. Ferner kann z.B. von der Seite betrachtet auch ein Verschwinden der farbigen Markierung als Überschreiten der Verschleißgrenze gewertet werden, so dass in diesem Fall spätestens die Raupenkette z.B. ausgetauscht werden sollte.

Dabei kann das farbige Material als Markierung als vollständige Schicht zwischen dem Stollenkörper und dem Stollenfuß angeordnet werden. Dies kann vorteilhaft sein, um eine vollflächige Markierung der Verschleißgrenze auszubilden, deren Erreichen über die gesamte Fläche des äußeren Profilierungselements erkannt werden kann. Hierdurch kann ein Erreichen der Verschleißgrenze an jeder Stelle des äußeren Profilierungselements von dem Stollenkörper aus betrachtet möglichst sicher erkannt werden.

Alternativ kann das farbige Material als Markierung auch nur abschnittsweise zwischen dem Stollenkörper und dem Stollenfuß angeordnet werden. Vorzugsweise kann das farbige Material als Markierung als ein in der Querrichtung verlaufender Streifen oder Balken durch das äußere Profilierungselement hindurch ausgeführt werden. Dies kann weiterhin ausreichend sein, um das Erreichen der Verschleißgrenze verlässlich und rechtzeitig optisch wenigstens von der Seite in Querrichtung erkennen zu können. Gleichzeitig kann das äußere Profilierungselement jedoch in der Höhe bzw. auf den Seiten seiner Flanken, welche in Kontakt mit einem Untergrund stehen können, unverändert bleiben. Hierdurch können die Materialien und damit auch deren Eigenschaften bzw. Wirkungen trotz der Ergänzung eines erfindungsgemäßen farbigen Materials als Markierung möglichst unverändert bleiben.

Erfindungsgemäss weist das äußere Profilierungselement zumindest abschnittsweise dort, wo die Grenze zwischen dem Stollenkörper und dem Stollenfuß verläuft, eine farbige Markierung auf, insbesondere ist dort eine farbige Markierung von außen aufgebracht, welche sich farblich von dem Material des Stollenkörpers und von dem Material des Stollenfußes unterscheidet. Auf diese Weise kann eine optische Markierung dadurch vorgesehen werden, indem eine farbige Markierung derart in den Stollenfuß eingebracht oder auf den Stollenfuß aufgebracht ist, dass bei einer Beschädigung bzw. einem Abtrag der farbigen Markierung ein Erreichen bzw. Überschreiten der Verschleißgrenze optisch von einem Benutzer einfach und zuverlässig erkannt werden kann.

Auch in diesem Fall kann die farbige Markierung abschnittsweise, insbesondere an der Seite des äußeren Profilierungselements in Querrichtung, oder umlaufend vorgesehen sein. Die jeweiligen Eigenschaften und Vorteile wurden bereits zuvor beschrieben und sollen hier nicht wiederholt werden.

Alternativ weist erfindungsgemäß das äußere Profilierungselement umlaufend, dort, wo die Grenze zwischen dem Stollenkörper und dem Stellenfuß verläuft, eine Vertiefung und bzw. oder eine Hervorhebung auf. Auf diese Weise kann eine sowohl optisch als auch besonders haptisch erkennbare Markierung der Verschleißgrenze geschaffen werden.

Die Hervorhebung kann aus dem Material des äußeren Profilierungselements mit ausgebildet oder als separat ausgebildetes Element z.B. aufgeklebt oder anvulkanisiert sein. Werden für den Stollenkörper und den Stollenfuß unterschiedliche Materialien verwendet, kann die Hervorhebung vorzugsweise einem der beiden Elemente zugeordnet und aus dessen Material bzw. aus einem dritten Material gefertigt sein.

Als Vertiefung kann die Markierung z.B. als Nut durch nachträglichen Materialabtrag nach einer Fertigstellung des äußeren Profilierungselements wie z.B. nach einer Vulkanisation in dessen Oberfläche eingebracht worden sein. Auch kann die Vertiefung durch eine Form ausgebildet werden, in der das äußere Profilierungselement hergestellt werden kann.

Hervorhebungen sowie Vertiefungen lassen sich dabei ebenso miteinander kombinieren wie mit den zuvor beschriebenen farbigen Markierungen, um eine möglichst sicher und einfach zu erkennende Verschleißgrenze zu schaffen.

Gemäß einem weiteren Aspekt der vorliegenden Erfindung weisen der Stollenkörper und der Stollenfuß unterschiedliche Materialien auf, vorzugsweise bestehen aus unterschiedlichen Materialien.

Diesem Aspekt der vorliegenden Erfindung liegt dabei die Erkenntnis zugrunde, dass es bei allen bekannten Gummiraupenketten bzw. deren Herstellungsverfahren nachteilig sein kann, dass die nach außen zeigende Profilierung auf unterschiedliche Arten beansprucht werden können. So können die Stollenkörper durch den Kontakt zum Untergrund einem starken Abrieb ausgesetzt sein, so dass hier eine möglichst hohe Abriebfestigkeit vorteilhaft sein kann. Ferner sollen die Stollen üblicherweise eine möglichst gute Haftung zum Untergrund aufweisen. Die Stollenfüsse werden jedoch üblicherweise stark dynamisch beansprucht. Daher können an dieser Stelle eine möglichst geringe Eigenerwärmung, eine hohe dynamische Festigkeit sowie eine gute Anbindung an die weiter innenliegenden Materialschichten vorteilhaft sein.

Diese Anforderungen widersprechen sich zumindest teilweise, so dass mit dem Material der Stollen stets ein Kompromiss zwischen diesen Anforderungen eingegangen werden muss. Dies kann zu einer nur unzureichenden Lebensdauer der nach außen zeigenden Profilierung bzw. der Außenzähne von Raupenketten führen.

Weisen erfindungsgemäß der Stollenkörper und der Stollenfuß nun unterschiedliche Materialien auf bzw. bestehen aus unterschiedlichen Materialien, so können die Materialien jeweils derart gewählt bzw. ausgebildet werden, dass sie auf die jeweiligen Anforderungen möglichst gut ausgelegt sind. Hierdurch können die Lebensdauer und bzw. oder die Belastbarkeit von Raupenkette verbessert werden.

Dieser Aspekt der vorliegenden Erfindung ist insbesondere dazu geeignet, bei einem Herstellungsverfahren für Gummiraupenketten gemäß der DE 10 2015 205 071 A1 angewendet zu werden. Dies ist dadurch begründet, dass dort unvulkanisierte Formelemente, welche die Außenzähne der Gummiraupenkette bilden sollen, die in entsprechenden Aussparungen der Außenform eingebracht werden. Daher kann zur einfachen und kostengünstigen Umsetzung der vorliegenden Erfindung zuerst das Material, welches den Stollenkörper des Stollens bilden soll, in die Außenform eingebracht werden. Darüber kann dann das Material, welches den Stollenfuß des Stollens bilden soll, eingebracht werden. Ansonsten kann das Herstellungsverfahren der DE 10 2015 205 071 A1 unverändert bleiben. Alternativ kann der Rohling des Stollens zuerst aus dem Stollenkörper und dem Stollenfuß aus den verschiedenen Materialen aufgebaut und dann als ein Stück in die Außenform eingelegt werden.

Vorteilhaft ist hierbei, dass bei dem Herstellungsverfahren für Gummiraupenketten gemäß der DE 10 2015 205 071 A1 eine vergleichsweise geringe Verlagerung der Zugträger auftritt. Somit können auch Strömungsbewegungen zwischen den übrigen Materialschichten wie auch zwischen dem Stollenkörper und dem Stollenfuß während der Vulkanisation vergleichsweise gut vermieden werden, so dass die beiden unterschiedlichen Materialbereiche von Stollenkörper und Stollenfuß vergleichsweise verlässlich und reproduzierbar positioniert und voneinander getrennt werden können. Auf diese Weise kann erreicht werden, dass die Eigenschaften der beiden unterschiedlichen Materialien von Stollenkörper und Stollenfuß auch an den Stellen angeordnet und genutzt werden können, wo dies vorgesehen ist.

Gemäß einem weiteren Aspekt der vorliegenden Erfindung weist der Stollenkörper ein Material auf, vorzugsweise besteht der Stollenkörper aus einem Material, welches abriebfester ist und bzw. oder eine bessere Haftung und bzw. oder eine bessere Dämpfung zum Untergrund bewirken kann als das Material des Stollenfußes. Vorzugsweise kann das Material des Stollenkörpers abriebfester und bzw. oder schnittfester sein als das Material des Stollenfußes. Vorzugsweise kann das Material des Stollenkörpers alternativ oder zusätzlich eine besser Dämpfung und bzw. oder eine bessere Haftung zum Untergrund wie z.B. zu einer Straße als das Material des Stollenfußes aufweisen. Hierdurch können die Eigenschaften am Stollenkörper erreicht werden, welche genau an dieser Stelle vorteilhaft bzw. erforderlich sind. Als Materialien des Stollenkörpers mit derartigen Eigenschaften können vorzugsweise Naturkautschuk, eine Mischung aus Naturkautschuk und StyrolButadien-Kautschuk oder eine Mischung aus Naturkautschuk und Isopren-Kautschuk verwendet werden.

Gemäß einem weiteren Aspekt der vorliegenden Erfindung weist der Stollenfuß ein Material auf, vorzugsweise besteht der Stollenfuß aus einem Material, welches eine geringere Eigenerwärmung und bzw. oder eine höhere dynamische Festigkeit und bzw. oder eine bessere Anbindung an das Material des Kettenkörpers aufweist als das Material des Stollenkörpers. Hierdurch können die Eigenschaften am Stollenfuß erreicht werden, welche genau an dieser Stelle vorteilhaft bzw. erforderlich sind. Als Material des Stollenfußes mit derartigen Eigenschaften können vorzugsweise Naturkautschuk mit härteerhöhenden Füllstoffen wie z.B. Ruß oder Silica verwendet werden.

Gemäß einem weiteren Aspekt der vorliegenden Erfindung weist bzw. weisen das Material des Stollenkörpers und bzw. oder das Material des Stollenfußes ein elastomeres Material auf, vorzugsweise besteht bzw. bestehen das Material des Stollenkörpers und bzw. oder das Material des Stollenfußes aus einem elastomeren Material. Hierdurch kann das äußere Profilierungselement Eigenschaften eines elastomeren Materials aufweisen, welche für die Anwendungen von Raupenketten vorteilhaft sein können.

Gemäß einem weiteren Aspekt der vorliegenden Erfindung ist in dem Kettenkörper eine Mehrzahl von Zugträgern, vorzugsweise von Stahlseilen, eingebettet. Hierdurch können Kräfte im Wesentlichen in Querrichtung und bzw. oder in Längsrichtung über die Zugträger übertragen werden. Insbesondere können hierdurch Zugkräfte in Längsrichtung der Raupenkette übertragen werden.

Vorzugsweise ist die Raupenkette in Umfangsrichtung, d.h. in Umlaufrichtung, bzw. in Längsrichtung endlos geschlossen ausgebildet. Dabei kann die Raupenkette bereits endlos geschlossen hergestellt werden oder zunächst offen hergestellt und danach endlos geschlossen werden.

Mehrere Ausführungsbeispiele und weitere Vorteile der Erfindung werden nachstehend im Zusammenhang mit der folgenden Figuren erläutert. Darin zeigt:
- Fig. 1: eine schematische perspektivische Darstellung einer erfindungsgemäßen Raupenkette gemäß einem ersten Ausführungsbeispiel;
- Fig. 2: eine schematische perspektivische Darstellung einer erfindungsgemäßen Raupenkette gemäß einem zweiten Ausführungsbeispiel;
- Fig. 3: eine schematische perspektivische Darstellung einer erfindungsgemäßen Raupenkette gemäß einem dritten Ausführungsbeispiel;
- Fig. 4: eine schematische perspektivische Darstellung einer erfindungsgemäßen Raupenkette gemäß einem vierten Ausführungsbeispiel; und
- Fig. 5: eine schematische perspektivische Darstellung einer erfindungsgemäßen Raupenkette gemäß einem fünften Ausführungsbeispiel.

Die Beschreibung der o.g. Figuren erfolgt in kartesischen Koordinaten mit einer Längsrichtung X, einer zur Längsrichtung X senkrecht ausgerichteten Querrichtung Y sowie einer sowohl zur Längsrichtung X als auch zur Querrichtung Y senkrecht ausgerichteten vertikalen Richtung Z, welche auch als Höhe Z bezeichnet werden kann.

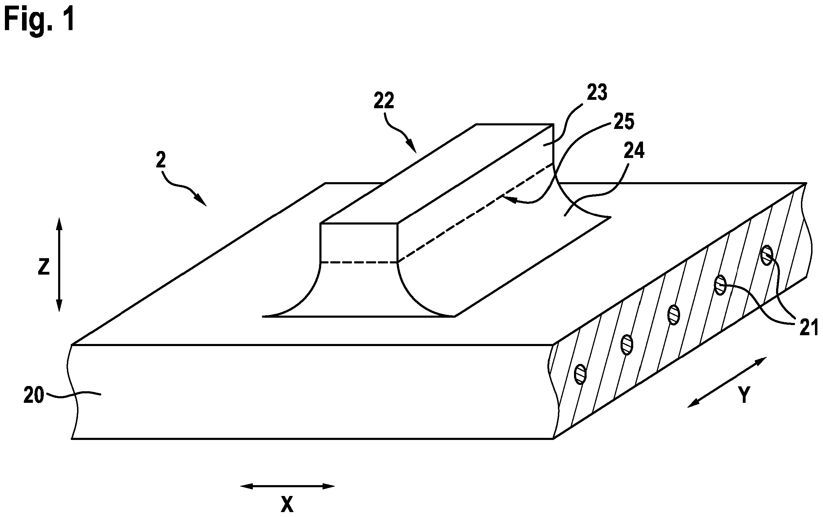

Fig. 1 zeigt eine schematische perspektivische Darstellung einer erfindungsgemäßen Raupenkette 2 gemäß einem ersten Ausführungsbeispiel. Die Raupenkette 2 ist als Gummiraupenkette 2 ausgebildet und weist einen Kettenkörper 20 auf, welcher aus einem elastomeren Material ausgebildet ist, in dem eine Mehrzahl von Zugträgern 21 in Form von Stahlseilen 21 eingebettet sind. Der Kettenkörper 20 und die Zugträger 21 sind in Umfangsrichtung bzw. in Umlaufrichtung X endlos geschlossen.

Auf der Oberfläche seiner oberen Seite weist der Kettenkörper 20 eine Mehrzahl von äußeren Profilierungselementen 22 auf, von denen in den Fig. 1 bis 5 jeweils ein äußeres Profilierungselement 22 exemplarisch dargestellt ist. Das äußere Profilierungselement 22 kann auch als Stollen 22 bezeichnet werden, welcher sich funktional in einen nach oben zeigenden Stollenkörper 23 und eine Stollenfuß 24, welcher den Stollenkörper 22 mit dem Kettenkörper 20 verbindet, aufteilen lässt.

Die Fläche, auf der der Stollenkörper 23 und der Stollenfuß 24 zusammentreffen, kann als Grenze 25 zwischen dem Stollenkörper 23 und dem Stollenfuß 24 angesehen werden, welche gleichzeitig die Verschleißgrenze 25 darstellt, bei deren Erreichen der Stollenkörper 23 als derart abgetragen angesehen werden kann, dass die Gummiraupenkette 2 nicht weiter verwendet werden sollte.

Gemäß dem ersten Ausführungsbeispiel der Fig. 1 weist das Material des Stollenkörpers 23 eine andere Farbe als das Material des Stollenfußes 24 auf. Auf diese Weise kann der Stollenkörper 22 optisch einfach und zuverlässig von dem Stollenfuß 24 unterschieden werden, so dass auch ein Abtrag des Stollenkörpers 23 optisch einfach und zuverlässig erkannt werden kann. Hieraus kann auf das Maß des Abriebs bzw. des Verschleißes des Stollenkörpers 23 geschlossen werden.

Anstelle den Stollenkörper 23 aus einem andersfarbigen Material herzustellen bzw. ein andersfarbiges Material aufweisen zu lassen könnte der Stollenkörper 23 gemäß des ersten Ausführungsbeispiels auch von einer andersfarbigen Schicht überzogen sein, um die zuvor beschriebenen Eigenschaften zumindest teilweise aufzuweisen. Dies kann die Umsetzung der vorliegenden Erfindung gemäß des ersten Ausführungsbeispiels vereinfachen.

Die Ausführung des ersten Ausführungsbeispiels als andersfarbiges Material kann jedoch sicherer sein, weil die Farbe des Materials den Stollenkörper 23 vollkommen durchdringen und hierdurch sicherer mit dem Stollenkörper 23 verbunden und auch von oben sichtbar sein kann als eine aufgetragene Schicht an den Seiten bzw. Flanken des Stollenkörpers 23.

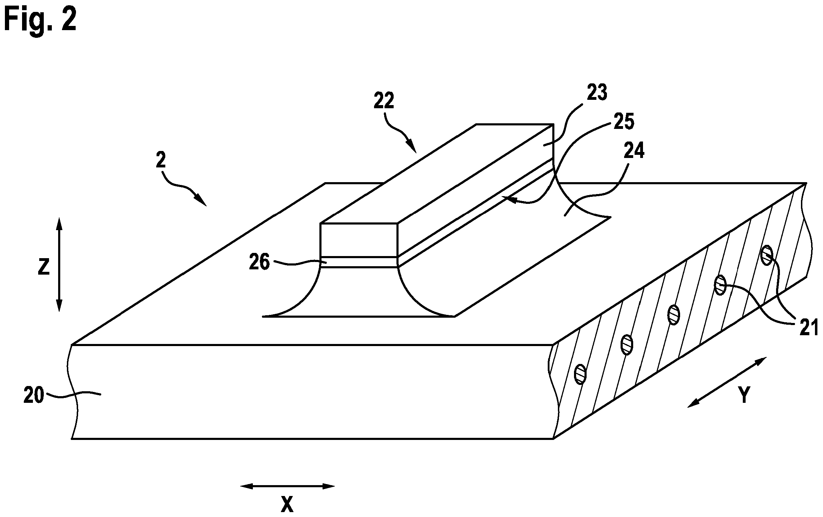

Fig. 2 zeigt eine schematische perspektivische Darstellung einer erfindungsgemäßen Raupenkette 2 gemäß einem zweiten Ausführungsbeispiel. In diesem Fall ist ein farbiges Material als Markierung 26 zwischen dem Stollenkörper 23 und dem Stollenfuß 24 angeordnet, um die Verschleißgrenze 25, die innerhalb der farbigen Markierung 26 oder zwischen der farbigen Markierung 26 und dem Stollenkörper 23 liegen kann, zu markieren.

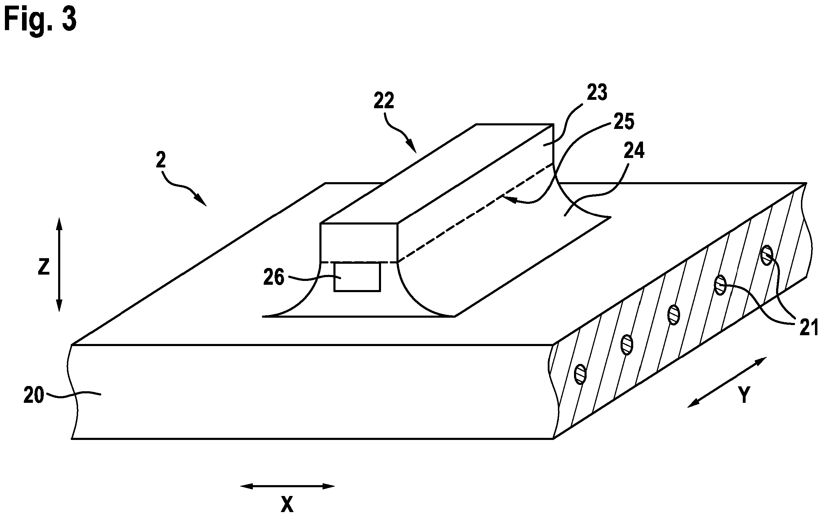

Fig. 3 zeigt eine schematische perspektivische Darstellung einer erfindungsgemäßen Raupenkette 2 gemäß einem dritten Ausführungsbeispiel. In diesem Fall ist ein farbiges Material als Markierung 26 unterhalb des Stollenkörpers 23 in den Stollenfuß 24 eingebracht. Hierzu kann ein farbiges Material in Form eines separaten Körpers verwendet werden, welcher an dieser Stelle in eine entsprechende Aussparung des Stollenfußen 24 vor der Vulkanisation eingebracht und zusammen mit dem Stollenkörper 23 und dem Stollenfuß 24 vulkanisiert wird. Ein derartiger separater Körper als einem elastomeren farbigen Material kann als Vulkanette bezeichnet werden. Auf diese Weise kann eine farbige Markierung 26 einfach umgesetzt werden. Ferner können die Flanken des Stollens 22 in der Höhe Z bzw. in der Längsrichtung X frei von einer Markierung 26 bleiben, da hier die Markierung 26 durch den Abtrieb des Untergrunds schnell verschwinden könnte, ohne dass hierdurch ein Erreichen der Verschleißgrenze 25 angezeigt werden könnte.

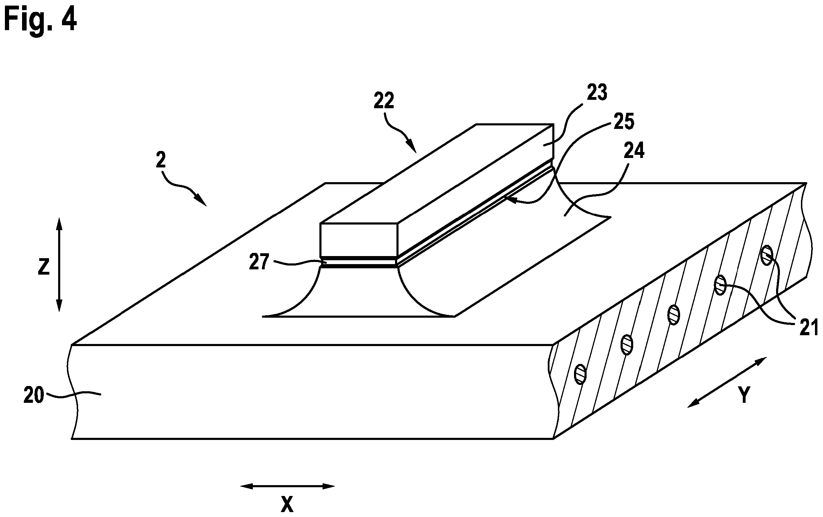

Fig. 4 zeigt eine schematische perspektivische Darstellung einer erfindungsgemäßen Raupenkette 2 gemäß einem vierten Ausführungsbeispiel. In diesem Fall wird die Verschleißgrenze 25 durch eine umlaufende Vertiefung 27 in Form einer Nut 27 markiert, so dass die Verschleißgrenze 25 sowohl optisch als auch besonders haptisch erkannt werden kann.

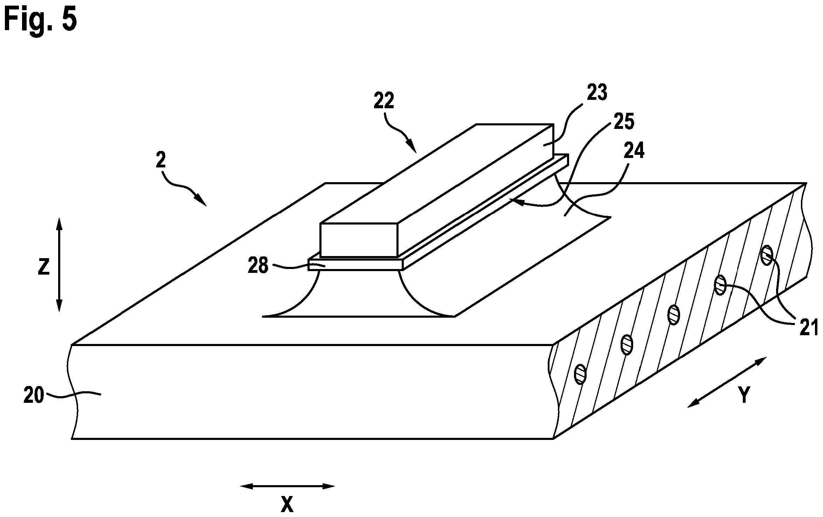

Fig. 5 zeigt eine schematische perspektivische Darstellung einer erfindungsgemäßen Raupenkette 2 gemäß einem fünften Ausführungsbeispiel. In diesem Fall wird die Verschleißgrenze 25 durch eine umlaufende Hervorhebung 27 in Form einer Kante 27 markiert, so dass die Verschleißgrenze 25 sowohl optisch als auch besonders haptisch erkannt werden kann.

In allen Ausführungsbeispielen bestehen der Stollenkörper 23 und der Stollenfuß 24 aus zwei unterschiedlichen elastomeren Materialien, welche auf die jeweiligen Anforderungen ausgelegt sind. So besteht der Stollenkörper 23 aus einem Material, welches abriebfester als das Material des Stollenfußes 24 ist. Wird somit die Verschleißgrenze 25 erreicht, kann erfindungsgemäß erkannt werden, dass der Stollenkörper 23 als abriebfesterer Teil des Stollens 22 abgerieben ist und der Stollenfuß 24 als weniger abriebfester Teil des Stollens 22 nun in einen abreibenden Kontakt mit dem Untergrund kommen kann. Daher sollte bei Erreichen der Verschleißgrenze 25 die Gummiraupenkette 2 nicht weiter verwendet und ausgetauscht werden.

### Bezugszeichenliste (Teil der Beschreibung)

- X: Längsrichtung; Umlaufrichtung
- Y: Querrichtung
- Z: vertikale Richtung; Höhe

- 2: (Gummi-)Raupenkette
- 20: Kettenkörper; Karkasse
- 21: Zugträger; Stahlseile
- 22: äußere Profilierungselemente; Außenzähne; Stollen
- 23: Stollenkörper
- 24: Stollenfuß
- 25: Grenze zwischen Stollenkörper 23 und Stollenfuß 24; Verschleißgrenze
- 26: farbiges Material als Markierung; farbige Markierung
- 27: Vertiefung als Markierung; Nut
- 28: Hervorhebung als Markierung; Kante

## Patentansprüche

1. Raupenkette (2), insbesondere Gummiraupenkette (2), mit einem Kettenkörper (20), und mit
wenigstens einem äußeren Profilierungselement (22), vorzugsweise mit einer Mehrzahl von äußeren Profilierungselementen (22), welches von dem Kettenkörper (20) weg nach außen gerichtet ist,
wobei das äußere Profilierungselement (22) einen nach außen gerichteten Stollenkörper (23) und einen Stollenfuß (24) aufweist, welcher den Stollenkörper (23) mit dem Kettenkörper (20) verbindet, und
wobei das äußere Profilierungselement (22) zumindest abschnittsweise eine Markierung (26, 27, 28) aufweist, welche die Grenze (25) zwischen dem Stollenkörper (23) und dem Stellenfuß (24) optisch erkennbar machen kann, **dadurch gekennzeichnet, dass**
der Stollenkörper (23) ein Material einer ersten Farbe und der Stollenfuß (24) ein Material einer zweiten Farbe aufweist, wobei sich die beiden Farben voneinander unterscheiden.

2. Raupenkette (2), insbesondere Gummiraupenkette (2), mit
einem Kettenkörper (20), und mit
wenigstens einem äußeren Profilierungselement (22), vorzugsweise mit einer Mehrzahl von äußeren Profilierungselementen (22), welches von dem Kettenkörper (20) weg nach außen gerichtet ist,
wobei das äußere Profilierungselement (22) einen nach außen gerichteten Stollenkörper (23) und einen Stollenfuß (24) aufweist, welcher den Stollenkörper (23) mit dem Kettenkörper (20) verbindet, und
wobei das äußere Profilierungselement (22) zumindest abschnittsweise eine Markierung (26, 27, 28) aufweist, welche die Grenze (25) zwischen dem Stollenkörper (23) und dem Stellenfuß (24) optisch erkennbar machen kann, **dadurch gekennzeichnet, dass** zumindest abschnittsweise zwischen dem Stollenkörper (23) und dem Stollenfuß (24) ein farbiges Material als Markierung (26) angeordnet ist, welches sich farblich von dem Material des Stollenkörpers (23) und von dem Material des Stollenfußes (24) unterscheidet.

3. Raupenkette (2), insbesondere Gummiraupenkette (2), mit
einem Kettenkörper (20), und mit
wenigstens einem äußeren Profilierungselement (22), vorzugsweise mit einer Mehrzahl von äußeren Profilierungselementen (22), welches von dem Kettenkörper (20) weg nach außen gerichtet ist,
wobei das äußere Profilierungselement (22) einen nach außen gerichteten Stollenkörper (23) und einen Stollenfuß (24) aufweist, welcher den Stollenkörper (23) mit dem Kettenkörper (20) verbindet, und
wobei das äußere Profilierungselement (22) zumindest abschnittsweise eine Markierung (26, 27, 28) aufweist, welche die Grenze (25) zwischen dem Stollenkörper (23) und dem Stellenfuß (24) optisch erkennbar machen kann, **dadurch gekennzeichnet, dass**
das äußere Profilierungselement (22) zumindest abschnittsweise dort, wo die Grenze (25) zwischen dem Stollenkörper (23) und dem Stollenfuß (24) verläuft, eine farbige Markierung (26) aufweist, insbesondere dort eine farbige Markierung (26) von außen aufgebracht ist, welche sich farblich von dem Material des Stollenkörpers (23) und von dem Material des Stollenfußes (24) unterscheidet.

4. Raupenkette (2) nach einem der vorherigen Ansprüche, **dadurch gekennzeichnet, dass**
der Stollenkörper (23) und der Stollenfuß (24) unterschiedliche Materialien aufweisen, vorzugsweise aus unterschiedlichen Materialien bestehen.

5. Raupenkette (2) nach Anspruch 4, **dadurch gekennzeichnet, dass**
der Stollenkörper (23) ein Material aufweist, vorzugsweise aus einem Material besteht, welches abriebfester ist und/oder eine bessere Haftung und/oder eine bessere Dämpfung zum Untergrund bewirken kann als das Material des Stollenfußes (24).

6. Raupenkette (2) nach Anspruch 4 oder 5, **dadurch gekennzeichnet, dass** der Stollenfuß (24) ein Material aufweist, vorzugsweise aus einem Material besteht, welches eine geringere Eigenerwärmung und/oder eine höhere dynamische Festigkeit und/oder eine bessere Anbindung an das Material des Kettenkörpers (20) aufweist als das Material des Stollenkörpers (23).

7. Raupenkette (2) nach einem der vorherigen Ansprüche, **dadurch gekennzeichnet, dass**
das Material des Stollenkörpers (23) und/oder das Material des Stollenfußes (24) ein elastomeres Material aufweist/aufweisen, vorzugsweise aus einem elastomeren Material besteht/bestehen.

8. Raupenkette (2) nach einem der vorherigen Ansprüche, **dadurch gekennzeichnet, dass**
in dem Kettenkörper (20) eine Mehrzahl von Zugträgern (21), vorzugsweise von Stahlseilen (21), eingebettet ist.

## Claims

1. A caterpillar track (2), in particular a rubber caterpillar track (2), comprising a track body (20), and
at least one outer profiling element (22), preferably a plurality of outer profiling elements (22), facing outwards away from the track body (20),
wherein the outer profiling element (22) comprises an outwardly facing grouser body (23) and a grouser base (24) which connects the grouser body (23) to the track body (20), and
wherein the outer profiling element (22) includes, at least in sections, a mark (26, 27, 28) which can make the boundary (25) between the grouser body (23) and the grouser base (24) optically recognizable,
**characterized in that**
the grouser body (23) comprises a material of a first colour and the grouser base (24) comprises a material of a second colour, wherein the two colours our different.

2. A caterpillar track (2), in particular rubber caterpillar track (2) comprising:
a track body (20), and
at least one outer profiling element (22), preferably a plurality of outer profiling elements (22), facing outwards away from the track body (20),
wherein the outer profiling element (22) comprises an outwardly facing grouser body (23) and a grouser base (24) which connects the grouser body (23) to the track body (20),
and
wherein the outer profiling element (22) includes, at least in sections, a mark (26, 27, 28) which can make the boundary (25) between the grouser body (23) and the grouser base (24) optically recognizable,
**characterized in that**
a coloured material is arranged, at least in sections, between the grouser body (23) and the grouser base (24) as a mark (26) which differs in colour from the material of the grouser body (23) and from the material of the grouser base (24).

3. A caterpillar track (2), in particular rubber caterpillar track (2) comprising:
a track body (20), and
at least one outer profiling element (22), preferably a plurality of outer profiling elements (22), facing outwards away from the track body (20),
wherein the outer profiling element (22) comprises an outwardly facing grouser body (23) and a grouser base (24) which connects the grouser body (23) to the track body (20),
and
wherein the outer profiling element (22) includes, at least in sections, a mark (26, 27, 28) which can make the boundary (25) between the grouser body (23) and the grouser base (24) optically recognizable,
**characterized in that**
the outer profiling element (22) includes, at least in sections, a coloured mark (26) in places where the boundary (25) between the grouser body (23) and the grouser base (24) extends, in particular a coloured mark (26) is applied from the outside, which differs in colour from the material of the grouser body (23) and from the material of the grouser base (24).

4. The caterpillar track (2) according to any one of the preceding claims,
**characterized in that**
the grouser body (23) and the grouser base (24) include different materials, are preferably made of different materials.

5. The caterpillar track (2) according to claim 4,
**characterized in that**
the grouser body (23) includes a material, preferably is made of a material, which is more abrasion-resistant and/or can provide better adhesion and/or better damping against the ground than the material of the grouser base (24).

6. The caterpillar track (2) according to claims 4 or 5, **characterized in that** the grouser base (24) includes a material, preferably is made of a material, which has a lower self-heating and/or a higher dynamic strength and/or a better bond to the material of the track body (20) than the material of the grouser body (23).

7. The caterpillar track (2) according to any one of the preceding claims, **characterized in that**
the material of the grouser body (23) and/or the material of the grouser base (24) include an elastomeric material, preferably are made of an elastomeric material.

8. The caterpillar track (2) according to any one of the preceding claims, **characterized in that**
a plurality of tension members (21), preferably steel cables (21), are embedded in the track body (20).

## Revendications

1. Chenille (2), en particulier chenille en caoutchouc (2), comprenant
un corps de chenille (20), et comprenant
au moins un élément de profilage extérieur (22), de manière préférée comprenant une pluralité d'éléments de profilage extérieurs (22) orientés vers l'extérieur à partir du corps de chenille (20),
dans laquelle l'élément de profilage extérieur (22) présente un corps de crampon (23) orienté vers l'extérieur et un pied de crampon (24) reliant le corps de crampon (23) au corps de chenille (20), et
dans laquelle l'élément de profilage extérieur (22) présente au moins par sections un marquage (26, 27, 28) pouvant rendre optiquement identifiable la limite (25) entre le corps de crampon (23) et le pied de crampon (24), **caractérisée en ce que**
le corps de crampon (23) présente un matériau d'une première couleur et le pied de crampon (24) présente un matériau d'une seconde couleur, les deux couleurs étant différentes l'une de l'autre.

2. Chenille (2), en particulier chenille en caoutchouc (2), comprenant
un corps de chenille (20), et comprenant
au moins un élément de profilage extérieur (22), de manière préférée comprenant une pluralité d'éléments de profilage extérieurs (22) orientés vers l'extérieur à partir du corps de chenille (20),
dans laquelle l'élément de profilage extérieur (22) présente un corps de crampon (23) orienté vers l'extérieur et un pied de crampon (24) reliant le corps de crampon (23) au corps de chenille (20), et
dans laquelle l'élément de profilage extérieur (22) présente au moins par sections un marquage (26, 27, 28) pouvant rendre optiquement identifiable la limite (25) entre le corps de crampon (23) et le pied de crampon (24), **caractérisée en ce que**
un matériau coloré faisant office de marquage (26) et dont la couleur se différencie de celle(s) du matériau du corps de crampon (23) et du matériau du pied de crampon (24) est agencé au moins par sections entre le corps de crampon (23) et le pied de crampon (24).

3. Chenille (2), en particulier chenille en caoutchouc (2), comprenant
un corps de chenille (20), et comprenant
au moins un élément de profilage extérieur (22), de manière préférée comprenant une pluralité d'éléments de profilage extérieurs (22) orientés vers l'extérieur à partir du corps de chenille (20),
dans laquelle l'élément de profilage extérieur (22) présente un corps de crampon (23) orienté vers l'extérieur et un pied de crampon (24) reliant le corps de crampon (23) au corps de chenille (20), et
dans laquelle l'élément de profilage extérieur (22) présente au moins par sections un marquage (26, 27, 28) pouvant rendre optiquement identifiable la limite (25) entre le corps de crampon (23) et le pied de crampon (24), **caractérisée en ce que**
l'élément de profilage extérieur (22) présente, au moins par sections là où la limite (25) s'étend entre le corps de crampon (23) et le pied de crampon (24), un marquage coloré (26), et un marquage coloré (26) dont la couleur se différencie de celle(s) du matériau du corps de crampon (23) et du matériau du pied de crampon (24) y est en particulier appliqué depuis l'extérieur.

4. Chenille (2) selon l'une quelconque des revendications précédentes, **caractérisée en ce que**
le corps de crampon (23) et le pied de crampon (24) présentent des matériaux différents, de manière préférée sont constitués de matériaux différents.

5. Chenille (2) selon la revendication 4, **caractérisée en ce que**
le corps de crampon (23) présente un matériau, de manière préférée est constitué d'un matériau, qui est davantage résistant à l'abrasion et/ou qui peut fournir par rapport au terrain sous-jacent une meilleure adhérence et/ou un meilleur amortissement que le matériau du pied de crampon (24).

6. Chenille (2) selon la revendication 4 ou 5, **caractérisée en ce que** le pied de crampon (24) présente un matériau, de manière préférée est constitué d'un matériau, qui présente un échauffement intrinsèque plus faible et/ou une résistance dynamique plus élevée et/ou une meilleure liaison au matériau du corps de chenille (20) que le matériau du corps de crampon (23).

7. Chenille (2) selon l'une quelconque des revendications précédentes, **caractérisée en ce que**
le matériau du corps de crampon (23) et/ou le matériau du pied de crampon (24) présente(nt) un matériau élastomère, de manière préférée est/sont constitué(s) d'un matériau élastomère.

8. Chenille (2) selon l'une quelconque des revendications précédentes, **caractérisée en ce que**
une pluralité de pièces de traction (21), de manière préférée des câbles en acier (21), sont intégrées dans le corps de chenille (20).
